# FASCICULE DE BREVET EUROPEEN

(11) **EP 2 661 417 B1**
(45) Date de publication et mention de la délivrance du brevet: **10.05.2017**
(21) Numéro de dépôt: 12702304.2
(22) Date de dépôt: 06.01.2012
(51) Int. Cl.: C03C 17/36

(54) **SUBSTRAT MUNI D'UN EMPILEMENT A PROPRIETES THERMIQUES, EN PARTICULIER POUR REALISER UN VITRAGE CHAUFFANT**
SUBSTRAT MIT EINEM STAPEL MIT WÄRMEEIGENSCHAFTEN, INSBESONDERE ZUR HERSTELLUNG EINER BEHEIZTEN GLASSCHEIBE
SUBSTRATE PROVIDED WITH A STACK HAVING THERMAL PROPERTIES, IN PARTICULAR FOR MANUFACTURING HEATED GLASS

(30) Priorité: 06.01.2011 FR 1150087
(43) Date de publication de la demande: 13.11.2013
(73) Titulaire: Saint-Gobain Glass France, 92400 Courbevoie (FR)
(72) Inventeur: LAURENT, Stéphane, 92110 CLICHY (FR); DRESE, Robert, Décédé (DE)
(74) Mandataire: Saint-Gobain Recherche
(86) Numéro de dépôt international: PCT/FR2012/050041
(87) Numéro de publication internationale: WO 2012/093238

(56) Documents cités:
- EP-A1- 2 030 954
- US-A1- 2005 175 845
- US-A1- 2006 046 073

## Description

L'invention concerne un substrat transparent notamment en un matériau rigide minéral comme le verre, ledit substrat étant revêtu d'un empilement de couches minces comprenant plusieurs couches fonctionnelles pouvant agir sur le rayonnement solaire et/ou le rayonnement infrarouge de grande longueur d'onde.

L'invention concerne plus particulièrement un substrat, notamment un substrat verrier transparent, muni d'un empilement de couches minces comportant une alternance de « n » couches fonctionnelles métalliques, notamment de couches fonctionnelles à base d'argent ou d'alliage métallique contenant de l'argent, et de « (n + 1) » revêtements antireflet, avec n nombre entier ≥ 3, de manière à ce que chaque couche fonctionnelle soit disposée entre deux revêtements antireflet. Chaque revêtement comporte au moins une couche antireflet et chaque revêtement étant, de préférence, composé d'une pluralité de couches, dont une couche au moins, voire chaque couche, est une couche antireflet.

L'invention concerne plus particulièrement l'utilisation de tels substrats pour fabriquer des vitrages d'isolation thermique et/ou de protection solaire. Ces vitrages peuvent être destinés aussi bien à équiper les bâtiments que les véhicules, en vue notamment de diminuer l'effort de climatisation et/ou d'empêcher une surchauffe excessive (vitrages dits « de contrôle solaire ») et/ou diminuer la quantité d'énergie dissipée vers l'extérieur (vitrages dits « bas émissifs ») entraînée par l'importance toujours croissante des surfaces vitrées dans les bâtiments et les habitacles de véhicules.

Ces substrats peuvent en particulier être intégrés dans des dispositifs électroniques et l'empilement peut alors servir d'électrode pour la conduction d'un courant (dispositif éclairant, dispositif d'affichage, panneau voltaïque, vitrage électrochrome, ...) ou peuvent être intégrés dans des vitrages présentant des fonctionnalités particulières, comme par exemple des vitrages chauffants et en particulier des pare-brise chauffants de véhicule.

Au sens de la présente invention, un empilement à plusieurs couches fonctionnelles s'entend d'un empilement comportant au moins trois couches fonctionnelles.

Des empilements de couches à plusieurs couches fonctionnelles sont connus.

Dans ce type d'empilement, chaque couche fonctionnelle se trouve disposée entre deux revêtements antireflet comportant chacun en général plusieurs couches antireflet qui sont chacune en un matériau du type nitrure et notamment nitrure de silicium ou d'aluminium et/ou du type oxyde. Du point de vue optique, le but de ces revêtements qui encadrent la couche fonctionnelle est « d'antirefléter » cette couche fonctionnelle. Ces couches antireflet sont parfois appelées « couches diélectriques », par opposition à la nature métallique (et donc conductrice) des couches fonctionnelles.

Un revêtement de blocage très fin est toutefois intercalé parfois entre un ou chaque revêtement antireflet et une couche fonctionnelle adjacente : un revêtement de blocage disposé sous la couche fonctionnelle en direction du substrat et/ou un revêtement de blocage disposé sur la couche fonctionnelle à l'opposé du substrat et qui protège cette couche d'une éventuelle dégradation lors du dépôt du revêtement antireflet supérieur et lors d'un éventuel traitement thermique à haute température, du type bombage et/ou trempe.

Ces revêtements de blocage ne font pas partie des revêtements antireflet car en général ils ne sont pas pris en considération dans la définition optique de l'empilement.

L'art antérieur connaît par exemple de la demande internationale de brevet N° WO 2005/051858 des empilements à plusieurs couches fonctionnelles.

Dans les empilements à trois ou quatre couches fonctionnelles présentés dans ce document, les couches antireflet utilisées sont des couches considérées habituellement comme des couches à indice optique dit « moyen », c'est-à-dire ni bas, ni haut.

En effet, habituellement dans les empilements de couche minces, les couches d'indice optique « bas » présentent un indice optique égal ou inférieur à 1,60, les couches d'indice optique « moyen » présentent un indice optique compris entre > 1,60 et < 2,15 et les couches d'indice optique « haut » présentent un indice optique égal ou supérieur à 2,15.

Il est rappelé que n désigne l'indice de réfraction réel du matériau à une longueur d'onde donnée et k représente la partie imaginaire de l'indice de réfraction à une longueur d'onde donnée.

Dans tout le présent document, l'indice des couches est l'indice de réfraction mesuré à la longueur d'onde de 550 nm, comme habituellement ; pour simplifier les indices de réfraction, deux décimales après la virgule sont considérées, sans arrondi. Les coefficients d'extinction k sont également considérés à la longueur d'onde de 550 nm.

Il apparaît que la configuration des exemples de la demande N° WO 2005/051858 ne donne pas entièrement satisfaction.

Pour plusieurs applications il est souhaité que la transmission lumineuse de l'empilement (et par voie de conséquence du vitrage intégrant l'empilement) soit plus élevée à résistance par carré de l'empilement conservée basse et/ou que la réflexion lumineuse de l'empilement (et par voie de conséquence du vitrage intégrant l'empilement) soit plus basse à résistance par carré de l'empilement conservée basse et/ou que la couleur en réflexion soit moins marquée à résistance par carré de l'empilement conservée basse, avec des valeurs par exemples mesurées dans le système Lab plus proche de zéro. Une base résistance par carré est ici une résistance de 1 ohm/carré ou moins.

L'art antérieur connaît par ailleurs la demande de brevet européen N° EP 2 030 954.

Dans ce document, au moins deux couches appelées « diélectriques absorbantes » et qui ont par ailleurs chacune une absorption qualifiée de « neutre », sont disposées pour l'une sous la première la première couche fonctionnelle métallique en partant du substrat et pour l'autre au-dessus de la dernière couche fonctionnelle métallique en partant du substrat d'un empilement comportant au moins deux couches fonctionnelles métalliques.

Ces couches diélectriques absorbantes de ce document présentent un coefficient d'absorption k non négligeable, d'au moins 0,1.

Les couches diélectriques absorbantes de ce document sont ainsi qualifiées de « diélectrique » pour permettre de les distinguer des couches fonctionnelles métalliques, qui présentent aussi une certaine absorption. A titre d'information, le coefficient k de l'argent, matière des couches métalliques fonctionnelle, à 550 nm est de l'ordre de 3,34.

En outre, l'absorption qualifiée de « neutre » correspond en fait à une absorption équilibrée dans le domaine du rayonnement visible, avec un rapport du coefficient k dans les basses longueurs d'onde du visible (380 < λ < 450 nm) sur le coefficient k dans les hautes longueurs d'onde du visible (650 < λ < 760 nm) qui est équilibré, proche de 1, et plus précisément entre 0,52 et 1,9.

Le but poursuivi par la solution de ce document est d'augmenter la capacité de l'empilement à absorber le rayonnement solaire (et en particulier les infrarouges) en ayant une couleur qualifiée dans ce document de « plaisante » en utilisant ces couches absorbantes à absorption neutre et en les disposant d'une manière particulière dans l'empilement.

La conséquence nécessaire de cette solution est que l'empilement ne peut pas présenter une transmission lumineuse dans le visible élevée car les couches diélectriques absorbantes absorbent non seulement dans le domaine de l'infrarouge, mais aussi d'une manière non négligeable dans le domaine du rayonnement visible.

Les figures 7 et 8 de la demande de brevet européen N° EP 2 030 954 présentent respectivement le coefficient d'extinction k et l'indice n de deux composés de nitrure de silicium et de titane, l'un à 45 % de TiN et 55 % de nitrure de silicium et l'autre à 71 % de TiN et 29 % de nitrure de silicium.

Le coefficient k de TiN à 550 nm est de l'ordre de 1,88 et le coefficient k de Si₃N₄ à 550 nm est de l'ordre de 0,0135. En toute logique, la figure 7 montre que les valeurs de k pour les deux composés sont entre ces deux valeurs. Par ailleurs la figure 7 montre que les valeurs de k pour les deux composés sont relativement élevées ; l'insertion de Si₃N₄ à 29 % et 55 % dans TiN affecte donc peu le coefficient k de TiN.

L'indice de réfraction n de TiN à 550 nm est de l'ordre de 0,97 et l'indice de réfraction de Si₃N₄ à 550 nm est de l'ordre de 2,02. En toute logique, on s'attendrait à ce que l'indice de réfraction des composés constitués du mélange de ces deux matériaux soit entre ces deux valeurs, mais, contre toute attente, la figure 8 indique que l'indice obtenu à 550 nm par les composés est plus élevé que celui de Si₃N₄, entre 2,4 et 2,5 ; c'est incohérent. En outre, eu égard au phénomène de faible 'dilution' du coefficient k de TiN par Si₃N₄ montré en figure 7, on s'attendrait en figure 8, à ce que les indices des deux composés soient très faibles, très peu affecté par l'insertion de Si₃N₄ ; la figure 8 est d'autant plus incohérente.

En réalité, un composé constitué d'un mélange de nitrure de silicium et de nitrure de titane présente nécessairement un indice de réfraction compris entre l'indice de Si₃N₄ et celui de TiN.

L'art antérieur connaît en outre de la demande internationale de brevet N° WO 2005 /016842 des empilements à plusieurs couches fonctionnelles comportant en outre des couches en matériau diélectrique à haut indice.

Le but de l'invention est de fournir un empilement qui présente une très faible résistance par carré afin en particulier que le vitrage intégrant cet empilement puisse présenter une haute réflexion énergétique et/ou une très basse émissivité et/ou être chauffé par application d'un courant entre deux bus-barres électriquement raccordées à l'empilement, ainsi qu'une transmission lumineuse élevée et une couleur relativement neutre, en particulier en configuration feuilletée, et que ces propriétés soient de préférence obtenues après un (ou des) traitement(s) thermique(s) à haute température du type bombage et/ou trempe et/ou recuit, voire que ces propriétés soient obtenues avant un (ou des) traitement(s) thermique(s) à haute température du type bombage et/ou trempe et/ou recuit et qu'elles soient conservées dans une plage restreinte que l'empilement subisse ou non un (ou de) tel(s) traitement(s) thermique(s). La transmission lumineuse et la réflexion lumineuse auxquelles il est fait référence dans le présent document sont, bien sûr, la transmission lumineuse et la réflexion lumineuse dans le domaine du visible.

L'invention a ainsi pour objet, dans son acception la plus large, un substrat verrier transparent, selon la revendication 1. Les revendications dépendantes définissent des variantes avantageuses de cet objet.

Le substrat selon l'invention est ainsi muni d'un empilement de couches minces comportant une alternance de « n » couches fonctionnelles métalliques, notamment de couches fonctionnelles à base d'argent ou d'alliage métallique contenant de l'argent, et de « (n + 1) » revêtements antireflet, avec n nombre entier ≥ 3, chaque revêtement antireflet comportant au moins une couche antireflet, de manière à ce que chaque couche fonctionnelle soit disposée entre deux revêtements antireflet. La présente invention convient en particulier pour les empilements à n = 3 ou n = 4 couches fonctionnelles.

Ce substrat est remarquable en ce que ledit empilement comporte au moins deux couches antireflet à haut indice, chacune présentant un indice de réfraction ≥ 2,15 de telle sorte que le revêtement antireflet situé sous la première couche fonctionnelle en partant du substrat et le revêtement antireflet situé au-dessus de la dernière couche fonctionnelle en partant du substrat comportent chacun au moins une couche antireflet à haut indice et que chaque revêtement antireflet qui est disposé entre deux couches fonctionnelles ne comporte pas de couche antireflet à haut indice (c'est-à-dire que chaque revêtement antireflet qui est disposé entre deux couches fonctionnelles ne comporte aucune couche antireflet à haut indice présentant un indice de réfraction ≥ 2,15).

Par nature, dans le domaine technique de l'invention, une couche antireflet ne peut pas être couche absorbante car habituellement le terme « antireflet » désigne une couche non absorbante.

Les couches antireflet haut indice selon l'invention peuvent à ce titre être qualifiées de couches transparentes puisqu'elles ne sont pas absorbantes ; elles présentent chacune un coefficient d'absorption k négligeable, inférieur à 0,01.

A fortiori, les couches antireflet haut indice selon l'invention ne présentent pas d'absorption « neutre » ; elles ne présentent pas une absorption équilibrée dans le domaine du rayonnement visible, avec un rapport du coefficient k dans les basses longueurs d'onde du visible (380 < λ < 450 nm) sur le coefficient k dans les hautes longueurs d'onde du visible (650 < λ < 760 nm) qui est équilibré, proche de 1, et plus précisément entre 0,52 et 1,9 car ce rapport n'a de sens que pour des valeurs de k non négligeables.

Ces couches antireflet haut indice selon l'invention peuvent aussi être appelées « couches antireflet diélectriques haut indice », par opposition à la nature métallique (et donc conductrice) des couches fonctionnelles.

Le revêtement antireflet situé sous la première couche fonctionnelle en partant du substrat est, de préférence, constitué dans cet ordre en partant du substrat : une ou plusieurs couches antireflet à haut indice, puis une couche antireflet de mouillage d'indice moyen compris entre 1,60 et 2,15 en excluant ces valeurs, à base d'oxyde cristallisé, notamment à base d'oxyde de zinc, éventuellement dopé à l'aide d'au moins un autre élément comme l'aluminium.

Dans une variante particulière, le revêtement antireflet situé au-dessus de la dernière couche fonctionnelle en partant du substrat est constitué uniquement d'une ou de plusieurs couches antireflet à haut indice ; il ne comprend donc pas de couche d'indice moyen ou bas.

De préférence, au moins une, voire chaque, couche antireflet à haut indice est à base de nitrure de silicium et de zirconium. Un autre matériau possible pour la couche antireflet haut indice peut être choisi parmi : MnO (indice à 550 nm de 2,16), WO₃ (indice à 550 nm de 2,15), Nb₂O₅ (indice à 550 nm de 2,3), Bi₂O3 (indice à 550 nm de 2,6), Zr₃N₄ (indice à 550 nm de 2,55).

Il est connu que les couches minces à haut indice de réfraction présente au maximum un indice à 550 nm de 3,1. Chaque couche antireflet haut indice selon l'invention présente, de préférence, un indice égal ou inférieur à 2,6, voire égal ou inférieur à 2,3.

Lorsque qu'une couche antireflet à haut indice est choisie à base de nitrure de silicium et de zirconium, la proportion de silicium par rapport au zirconium est, de préférence, entre 40 et 80 % de Si pour 25 à 45 % de Zr, avec, bien sûr, un total en poids dans la cible de 100%, afin d'obtenir le haut indice souhaité.

Lorsque la proportion de silicium est élevée (à partir de 40 % en poids dans la cible), il est possible de prévoir un autre élément, comme par exemple Al, pour augmenter la conductivité de la cible. Dans ce cas, pour obtenir l'indice souhaité, il est préférable que les éléments Si, Zr et Al soient présent en proportion en poids dans la cible, respectivement selon les plages suivantes :
- pour Si : entre 45 % et 75 % en incluant ces valeurs,
- pour Zr : entre 20 et 50 % en incluant ces valeurs,
- pour Al : entre 1 % et 10 % en incluant ces valeurs,
avec, bien sûr, un total en poids dans la cible de 100%.

De préférence par ailleurs, lorsque la (ou les) couche(s) antireflet haut indice du dernier revêtement antireflet est (ou sont) une (ou des) couche(s) nitrurée(s), la totalité du revêtement antireflet situé au-dessus de la dernière couche fonctionnelle en partant du substrat est nitruré, afin de faciliter la fabrication de l'empilement.

De préférence par ailleurs, au moins une, voire chaque, couche antireflet à haut indice n'est pas à base d'oxyde de titane, TiO₂ ou TiO_{y}.

Dans une variante, l'épaisseur eₓ de chaque couche fonctionnelle de l'empilement (c'est-à-dire au moins des couches fonctionnelles de rang 2 et de rang 3 en partant du substrat) est inférieure à l'épaisseur de la couche fonctionnelle précédente en direction du substrat et est telle que : eₓ = α eₓ₋₁, avec x qui est le rang de la couche fonctionnelle en partant du substrat, x-1 qui est le rang de la couche fonctionnelle précédente en direction du substrat et α qui est un nombre tel que 0,5 ≤ α < 1, et de préférence 0,55 ≤ α ≤ 0,95, voire 0,6 ≤ α ≤ 0,95.

Dans une autre variante, l'épaisseur eₓ de chaque couche fonctionnelle de l'empilement (c'est-à-dire au moins des couches fonctionnelles de rang 2 et de rang 3 en partant du substrat) est identique à l'épaisseur de la couche fonctionnelle précédente en direction du substrat et est telle que : eₓ = α eₓ₋₁, avec x qui est le rang de la couche fonctionnelle en partant du substrat, x-1 qui est le rang de la couche fonctionnelle précédente en direction du substrat et α qui est un nombre tel que 0,5 ≤ α < 1, et de préférence 0,55 ≤ α ≤ 0,95, voire 0,6 ≤ α ≤ 0,95.

Dans une autre variante, l'épaisseur eₓ de chaque couche fonctionnelle de l'empilement (c'est-à-dire au moins des couches fonctionnelles de rang 2 et de rang 3 en partant du substrat) est identique à l'épaisseur de la couche fonctionnelle précédente en direction du substrat et est telle que : eₓ = α eₓ₋₁, avec x qui est le rang de la couche fonctionnelle en partant du substrat, x-1 qui est le rang de la couche fonctionnelle précédente en direction du substrat et α qui est un nombre tel que 0,85 ≤ α ≤ 1,15, et de préférence 0,90 ≤ α ≤ 1,1, voire 0,95 ≤ α ≤ 1,05.

Par « rang » au sens de la présente invention, on entend la numérotation en nombre entier de chaque couche fonctionnelle en partant du substrat : la couche fonctionnelle la plus proche du substrat étant la couche fonctionnelle de rang 1, la suivante en s'éloignant du substrat étant celle de rang 2, etc.

L'épaisseur de la première couche métallique fonctionnelle en partant du substrat (celle de rang 1) est telle que: 10 ≤ e₁ ≤ 18 en nm et de préférence 11 ≤ e₁ ≤ 15 en nm.

Ainsi, lorsque 0,55 ≤ α ≤ 0,95, l'épaisseur de la première couche métallique fonctionnelle en partant du substrat est telle que : 10 ≤ e₁ ≤ 18 en nm et de préférence 11 ≤ e₁ ≤ 15 en nm et lorsque 0,6 ≤ α ≤ 0,95, l'épaisseur de la première couche métallique fonctionnelle en partant du substrat est telle que : 10 ≤ e₁ ≤ 18 en nm et de préférence 11 ≤ e₁ ≤ 15 en nm.

Il est par ailleurs possible que 0,6 ≤ α ≤ 0,9 et que l'épaisseur de la première couche métallique fonctionnelle en partant du substrat soit telle que : 10 ≤ e₁ ≤ 18 en nm et de préférence 11 ≤ e₁ ≤ 15 en nm, voire que 0,6 ≤ α ≤ 0,85 et que l'épaisseur de la première couche métallique fonctionnelle en partant du substrat soit telle que : 10 ≤ e₁ ≤ 18 en nm et de préférence 11 ≤ e₁ ≤ 15 en nm.

Par ailleurs, en raison du fait qu'un but essentiel de l'invention est de parvenir à un empilement présentant une faible résistance par carré, l'épaisseur totale des couches métalliques fonctionnelles est, notamment lorsque 11 ≤ e₁ ≤ 15 en nm, de préférence supérieure à 30 nm et est notamment comprise entre 30 et 60 nm en incluant ces valeurs, voire cette épaisseur totale est comprise entre 35 et 50 nm pour un empilement de couches minces à trois couches fonctionnelles, voire cette épaisseur totale est comprise entre 40 et 60 nm pour un empilement de couches minces à quatre couches fonctionnelles.

De préférence, la valeur de α est différente (d'au moins 0,02, voire d'au moins 0,05) pour toutes les couches fonctionnelles de rang 2 et plus de l'empilement auxquelles la formule eₓ = α eₓ₋₁ est appliquée.

Il est important de constater ici que la décroissance dans la distribution des épaisseurs n'est pas une décroissance dans la distribution de toutes les couches de l'empilement (en prenant en compte les couches antireflet), mais uniquement une décroissance dans la distribution des épaisseurs des couches fonctionnelles.

A l'intérieur de l'empilement à épaisseur de couches fonctionnelles décroissantes en partant du substrat, toutes les couches fonctionnelles présentent des épaisseurs différentes ; toutefois, la distribution dans l'épaisseur des couches fonctionnelles à l'intérieur de l'empilement permet alors, d'une manière complètement surprenante, d'obtenir une meilleure résistance par carré que dans la configuration à épaisseur de couches fonctionnelles constantes ou à épaisseur de couches fonctionnelles croissantes en partant du substrat.

Sauf mention contraire, les épaisseurs évoquées dans le présent document sont des épaisseurs physiques, ou réelles (et non pas des épaisseurs optiques).

Par ailleurs, lorsqu'il est fait état d'un positionnement vertical d'une couche (ex. : en dessous /au-dessus), c'est toujours en considérant que le substrat porteur est positionné horizontalement, en bas, avec l'empilement au-dessus de lui ; Lorsqu'il est précisé qu'une couche est déposée directement sur une autre, cela signifie qu'il ne peut y avoir une (ou plusieurs) couche(s) intercalée(s) entre ces deux couches. Le rang des couches fonctionnelles est ici toujours défini en partant du substrat porteur de l'empilement (substrat sur la face duquel est déposé l'empilement).

L'épaisseur de chaque couche fonctionnelle est, de préférence, comprise entre 8 et 20 nm en incluant ces valeurs, voire entre 10 et 18 en nm en incluant ces valeurs, et de préférence encore entre 11 et 15 en nm en incluant ces valeurs.

L'épaisseur totale des couches métalliques fonctionnelles est de préférence supérieure à 30 nm et est notamment comprise entre 30 et 60 nm en incluant ces valeurs, voire cette épaisseur totale est comprise entre 35 et 50 nm pour un empilement de couches minces à trois couches fonctionnelles, voire cette épaisseur totale est comprise entre 40 et 60 nm pour un empilement de couches minces à quatre couches fonctionnelles.

L'empilement selon l'invention est un empilement à basse résistance par carré de telle sorte que sa résistance par carré R en ohms par carré est, de préférence, égale ou inférieure à 1 ohm par carré après un éventuel traitement thermique du type bombage, trempe ou recuit, voire même égale ou inférieure à 1 ohm avant traitement thermique car un tel traitement a en général pour effet de diminuer la résistance par carré.

Dans une variante spécifique de l'invention, chacun desdits revêtements antireflet disposé entre deux couches fonctionnelles et qui ne comporte pas de couche antireflet à haut indice comporte au moins une couche antireflet à base de nitrure de silicium, éventuellement dopé à l'aide d'au moins un autre élément, comme l'aluminium.

Dans une variante particulière de l'invention, la dernière couche de chaque revêtement antireflet sous-jacent à une couche fonctionnelle est une couche antireflet de mouillage à base d'oxyde cristallisé, notamment à base d'oxyde de zinc, éventuellement dopé à l'aide d'au moins un autre élément, comme l'aluminium.

La présente invention se rapporte par ailleurs au vitrage incorporant au moins un substrat selon l'invention, éventuellement associé à au moins un autre substrat et notamment un vitrage multiple du type double-vitrage ou triple vitrage ou un vitrage feuilleté et en particulier un vitrage feuilleté comportant des moyens pour la connexion électrique de l'empilement de couches minces afin de permettre de réaliser un vitrage feuilleté chauffant, ledit substrat porteur de l'empilement pouvant être bombé et/ou trempé.

Chaque substrat du vitrage peut être clair ou coloré. Un des substrats au moins notamment peut être en verre coloré dans la masse. Le choix du type de coloration va dépendre du niveau de transmission lumineuse et/ou de l'aspect colorimétrique recherchés pour le vitrage une fois sa fabrication achevée.

Le vitrage selon l'invention peut présenter une structure feuilletée, associant notamment au moins deux substrats rigides du type verre par au moins une feuille de polymère thermoplastique, afin de présenter une structure de type verre/empilement de couches minces/feuille(s)/verre. Le polymère peut notamment être à base de polyvinylbutyral PVB, éthylène vinylacétate EVA, polyéthylène téréphtalate PET, polychlorure de vinyle PVC.

Le vitrage peut alors présenter une structure de type : verre/empilement de couches minces/feuille(s) de polymère/verre.

Les vitrages selon l'invention sont aptes à subir un traitement thermique sans dommage pour l'empilement de couches minces. Ils sont donc éventuellement bombés et/ou trempés.

Le vitrage peut être bombé et/ou trempé en étant constitué d'un seul substrat, celui muni de l'empilement. Il s'agit alors d'un vitrage dit « monolithique ». Dans le cas où ils sont bombés, notamment en vue de constituer des vitrages pour véhicules, l'empilement de couches minces se trouve de préférence sur une face au moins partiellement non plane.

Le vitrage peut aussi être un vitrage multiple, notamment un double-vitrage, au moins le substrat porteur de l'empilement pouvant être bombé et/ou trempé. Il est préférable dans une configuration de vitrage multiple que l'empilement soit disposé de manière à être tourné du côté de la lame de gaz intercalaire. Dans une structure feuilletée, le substrat porteur de l'empilement peut être en contact avec la feuille de polymère.

Le vitrage peut aussi être un triple vitrage constitué de trois feuilles de verre séparée deux par deux par une lame de gaz. Dans une structure en triple vitrage, le substrat porteur de l'empilement peut être en face 2 et/ou en face 5, lorsque l'on considère que le sens incident de la lumière solaire traverse les faces dans l'ordre croissant de leur numéro.

Lorsque le vitrage est monolithique ou multiple du type double-vitrage, triple vitrage ou vitrage feuilleté, au moins le substrat porteur de l'empilement peut être en verre bombé ou trempé, ce substrat pouvant être bombé ou trempé avant ou après le dépôt de l'empilement.

L'invention concerne en outre l'utilisation du substrat selon l'invention, pour réaliser un vitrage à haute réflexion énergétique et/ou un vitrage à très basse émissivité et /ou un vitrage chauffant avec un revêtement transparent chauffant par effet Joule.

L'invention concerne en outre l'utilisation du substrat selon l'invention, pour réaliser une électrode transparente d'un vitrage électrochrome ou d'un dispositif d'éclairage ou d'un dispositif de visualisation ou d'un panneau photovoltaïque.

Le substrat selon l'invention peut-être en particulier utilisé pour réaliser un substrat à haute réflexion énergétique et/ou un substrat à très basse émissivité et /ou un revêtement transparent chauffant d'un vitrage chauffant.

Le substrat selon l'invention peut-être en particulier utilisé pour réaliser une électrode transparente d'un vitrage électrochrome (ce vitrage étant monolithique ou étant multiple du type double-vitrage ou triple vitrage ou vitrage feuilleté) ou d'un dispositif d'éclairage ou d'un écran de visualisation ou d'un panneau photovoltaïque. (« transparent » est à comprendre ici comme « non opaque »).

L'empilement selon l'invention permet d'obtenir une très faible résistance par carré, une transmission lumineuse élevée (> à 70 %, et même > 72 % en configuration feuilletée), une réflexion lumineuse faible (< à 14% en configuration feuilletée) et une couleur en réflexion peu prononcée (avec des valeurs de a* et b* dans le système Lab proches de zéro, ou en tout cas inférieure à +2 pour a*) qui en outre varie peu en fonction de l'angle d'observation.

En effet, il est apparu que de prévoir au moins une couche antireflet haut indice dans le premier revêtement antireflet sous la première couche fonctionnelle et au moins une couche antireflet haut indice dans le dernier revêtement antireflet au-dessus la dernière couche fonctionnelle sans prévoir de couche antireflet haut indice dans les revêtements antireflet intermédiaires situés chacun entre deux couches fonctionnelles permettait d'augmenter la transmission lumineuse et d'obtenir une couleur en réflexion très proche de zéro et ne variant que très peu en fonction de l'angle d'observation, sans que cela ne complexifie trop le dépôt de l'empilement, ni n'augmente trop son coût (en effet, en général un couche antireflet d'indice haut est plus difficile à déposer qu'une couche antireflet d'indice moyen et engendre un surcoût par rapport à une couche antireflet d'indice moyen).

Les revêtements antireflet de l'empilement selon l'invention ne comporte aucune couche absorbante.

Opérer en outre une distribution décroissante des épaisseurs des couches fonctionnelles en partant du substrat permet d'obtenir une résistance par carré de l'empilement très faible, tout en obtenant une variation de couleur en réflexion en fonction de l'angle certes moins bonne qu'avec une distribution croissante des épaisseurs mais en obtenant toute de même une variation de couleur en réflexion en fonction de l'angle qui est acceptable.

Toutefois, il est alors important que la différence d'épaisseur d'une couche fonctionnelle à l'autre en direction du substrat ou à l'opposé du substrat ne soit pas trop importante. C'est la raison pour laquelle α ≥ 0,5, et de préférence α ≥ 0,55, voire α ≥ 0,6.

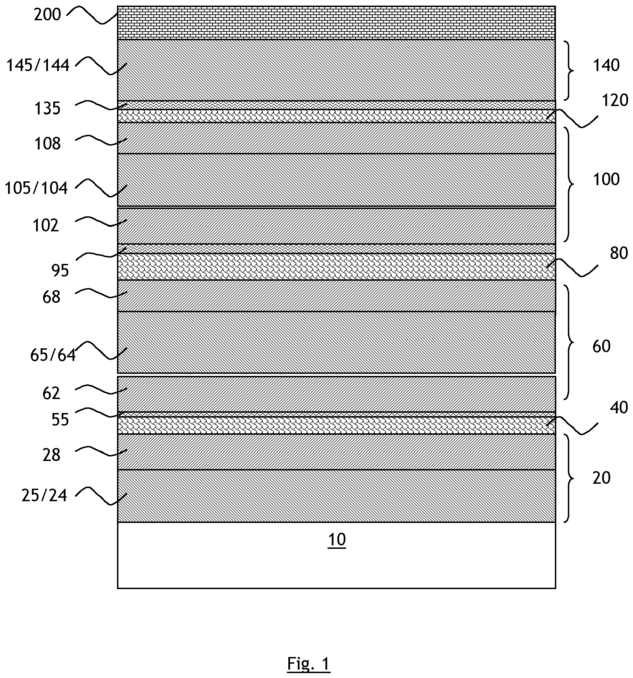

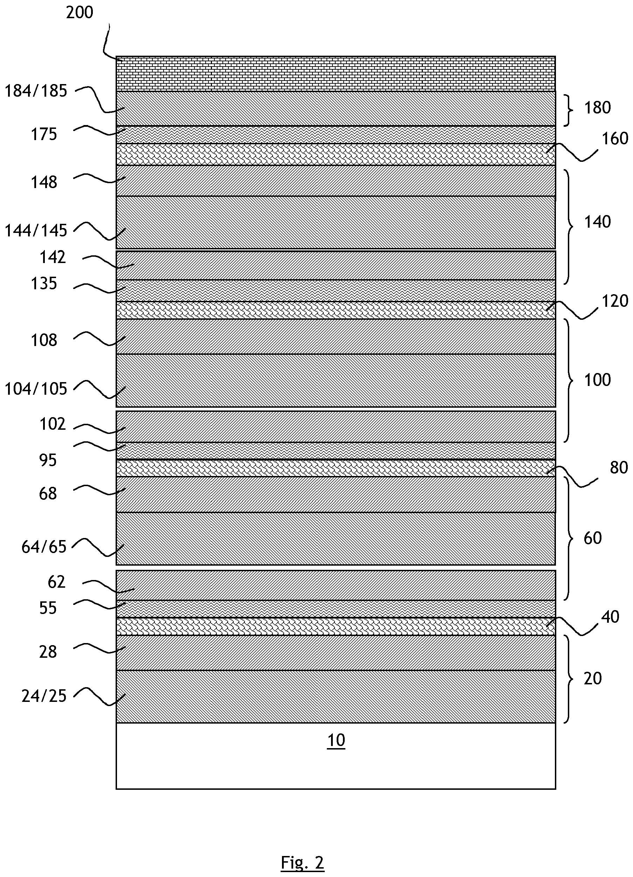

Les détails et caractéristiques avantageuses de l'invention ressortent des exemples non limitatifs suivants, illustrés à l'aide des figures ci-jointes illustrant
- en figure 1, un empilement à trois fonctionnelles selon l'invention, chaque couche fonctionnelle n'étant pas pourvue d'un revêtement de sous-blocage mais étant pourvue d'un revêtement de sur-blocage et l'empilement étant en outre pourvu d'un revêtement de protection optionnel ; et
- en figure 2, un empilement à quatre fonctionnelles selon l'invention, chaque couche fonctionnelle étant pourvue d'un revêtement de sous-blocage mais pas d'un revêtement de sur-blocage et l'empilement étant en outre pourvu d'un revêtement de protection optionnel.

Dans les figures 1 et 2, les proportions entre les épaisseurs des différentes couches ne sont pas rigoureusement respectées afin de faciliter leur lecture.

La figure 1 illustre une structure d'empilement à trois couches fonctionnelles 40, 80, 120, cette structure étant déposée sur un substrat 10 verrier, transparent.

Chaque couche fonctionnelle 40, 80, 120, est disposée entre deux revêtements antireflet 20, 60, 100, 140, de telle sorte que la première couche fonctionnelle 40 en partant du substrat est disposée entre les revêtements antireflet 20, 60 ; la deuxième couche fonctionnelle 80 est disposée entre les revêtements antireflet 60, 100 et la troisième couche fonctionnelle 120 est disposée entre les revêtements antireflet 100, 140.

Ces revêtements antireflet 20, 60, 100, 140, comportent chacun au moins une couche antireflet 24 ou 25, 28 ; 62, 64 ou 65, 68 ; 102, 104 ou 105, 108 ; 144 ou 145.

Eventuellement, d'une part chaque couche fonctionnelle 40, 80, 120, peut être déposée sur un revêtement de sous-blocage (non illustré) disposé entre le revêtement antireflet sous-jacent et la couche fonctionnelle et d'autre part chaque couche fonctionnelle peut être déposée directement sous un revêtement de sur-blocage 55, 95, 135 disposé entre la couche fonctionnelle et le revêtement antireflet sus-jacent à cette couche.

Sur la figure 1 on constate que l'empilement se termine par une couche de protection optionnelle 200, qui n'est pas présente pour les exemples ci-après. En général, cette couche de protection est très fine et elle n'est pas prise en considération dans la définition optique du dernier revêtement antireflet de l'empilement.

Dans tous les exemples ci-après l'empilement de couches minces est déposé sur un substrat en verre sodo-calcique clair d'une épaisseur de 1,6 mm, distribué par la société SAINT-GOBAIN.

Pour chacun des exemples ci-après, les conditions de dépôt des couches, qui ont été déposées par pulvérisation (pulvérisation dite « cathodique magnétron »), sont les suivantes :

**Tableau 1**

| Couche | Cible employée | Pression de dépôt | Gaz | Indice à 550 nm |
|---|---|---|---|---|
| SiAlN | Si:Al à 92:8 % wt | 3,2.10⁻³ mbar | Ar /(Ar + N₂) à 55 % | 2,03 |
| SiZrN | Si:Zr:Al à 58,5:36,5:5 % wt | 2,2.10⁻³ mbar | Ar /(Ar+N₂) à 56 % | 2,24 |
| ZnO | Zn:Al à 98:2 % wt | 1,8.10⁻³ mbar | Ar /(Ar + O₂) à 63 % | 1,95 |
| NiCr | NiCr à 80:20 wt | 2,5.10⁻³ mbar | Ar à 100 % | |
| Ag | Ag | 3.10⁻³ mbar | Ar à 100 % | |

Une première série de quatre exemples a été réalisée ; ces exemples sont numérotés de 1 à 4 ci-après. Ils ont tous les quatre été incorporés dans un vitrage feuilleté de structure : substrat en verre porteur de l'empilement de 1,6 mm d'épaisseur / feuille intercalaire en PVB de 0,76 mm d'épaisseur / substrat en verre de 1,6 mm d'épaisseur.

Le tableau 2 suivant résume les matériaux et les épaisseurs en nanomètres de chaque couche et la composition des couches qui constituent l'empilement en fonction de leurs positions vis-à-vis du substrat porteur de l'empilement (dernière ligne en bas du tableau) ; les numéros de la 1^{ère} et de la 2^{e} colonne correspondent aux références de la figure 1.

**Tableau 2**

| | | | Ex. 1 | Ex. 2 | Ex. 3 | Ex. 4 |
|---|---|---|---|---|---|---|
| | | Verre | | | | |
| | | PVB | | | | |
| 140 | 145 | SiZrN | | 30 | | 30 |
| | 144 | SiAlN | 35 | | 35 | |
| 135 | | NiCr | 1 | 1 | 1 | 1 |
| 120 | | Ag3 | 13 | 13 | 13 | 13 |
| 100 | 108 | ZnO | 7 | 7 | 7 | 7 |
| | 105 | SiZrN | | 58 | 58 | |
| | 104 | SiAlN | 63 | | | 63 |
| | 102 | ZnO | 7 | 7 | 7 | 7 |
| 95 | | NiCr | 1 | 1 | 1 | 1 |
| 80 | | Ag2 | 13 | 13 | 13 | 13 |
| 60 | 68 | ZnO | 7 | 7 | 7 | 7 |
| | 65 | SiZrN | | 58 | 58 | |
| | 64 | SiAlN | 63 | | | 63 |
| | 62 | ZnO | 7 | 7 | 7 | 7 |
| 55 | | NiCr | 1 | 1 | 1 | 1 |
| 40 | | Ag1 | 13 | 13 | 13 | 13 |
| 20 | 28 | Zn0 | 7 | 7 | 7 | 7 |
| | 25 | SiZrN | | 30 | | 30 |
| | 24 | SiAlN | 35 | | 35 | |
| | 10 | Verre | | | | |

Chaque revêtement antireflet 20, 60, 100 sous-jacent à une couche fonctionnelle 40, 80, 120 comporte une dernière couche de mouillage 28, 68, 108 à base d'oxyde de zinc cristallisé, dopé à l'aluminium et qui est au contact de la couche fonctionnelle 40, 80, 120 déposée juste au-dessus.

Chaque revêtement antireflet 20, 60, 100, 140 comporte :
- soit une couche antireflet 24, 64, 104, 144 à indice moyen, à base de nitrure de silicium, dopé à l'aluminium appelée ici SIAlN par soucis de simplification bien que la nature réelle de la couche soit en fait du Si₃N₄:Al comme expliqué ci-avant ;
- soit une couche antireflet 25, 65, 105, 145 à haut indice, à base de nitrure de silicium dopé au zirconium appelée ici SiZrN par soucis de simplification bien que la nature réelle de la couche soit en fait du Si₃N₄:Zr comme expliqué ci-avant.

Ces couches sont importantes pour obtenir l'effet barrière à l'oxygène lors du traitement thermique.

Ces quatre exemples présentent de plus l'avantage d'être trempables et bombables.

Ces quatre exemples présentant la même épaisseur totale de couche fonctionnelle et la même répartition dans l'épaisseur des couches fonctionnelles : ils présentent donc les mêmes résistances par carré ; toutefois, ils ne présentent pas les mêmes caractéristiques de transmission lumineuse, de réflexion lumineuse et de couleur en réflexion.

Le tableau 3 résume pour les exemples 1 à 4 la résistance par carré mesurée pour chaque substrat porteur de l'empilement après traitement thermique (bombage à 640 °C) et les principales caractéristiques optiques mesurées pour le vitrage feuilleté complet intégrant le substrat porteur de l'empilement :

**Tableau 3**

| | | Ex. 1 | Ex. 2 | Ex. 3 | Ex. 4 |
|---|---|---|---|---|---|
| T_{L} | % | 72,43 | 73,62 | 72,65 | 73,42 |
| R_{L} | % | 11,04 | 9,87 | 10,91 | 9,97 |
| R_{□} | Ohms/□ | 1,00 | 1,00 | 1,00 | 1,00 |
| Couleur reflexion | a_{R0}* | -2,0 | -1,4 | -2,7 | -1,9 |
| | b_{R0}* | -1,9 | -2,2 | -2,1 | -1,0 |
| Couleur reflexion | a_{R60}* | -6,3 | -5,3 | -6,6 | -5,0 |
| | b_{R60}* | 1,25 | 0,8 | 1,1 | 0,8 |

Pour ces substrats,
- T_{L} indique : la transmission lumineuse dans le visible en %, mesurée selon l'illuminant A à 10° Observateur ;
- R_{L} indique : la réflexion lumineuse dans le visible en %, mesurée selon l'illuminant A à 10° Observateur ;
- R_{□} indique : la résistance par carré de l'empilement, en ohms par carré après traitement thermique (bombage) ;
- a_{R0}* et b_{R0}* indiquent les couleurs en réflexion a* et b* dans le système LAB mesurées selon l'illuminant D65 à 10° Observateur et mesurées ainsi sensiblement perpendiculairement au vitrage ;
- a_{R60}* et b_{R60}* indiquent les couleurs en réflexion a* et b* dans le système LAB mesurées selon l'illuminant D65 à 10° Observateur et mesurées sensiblement avec un angle de 60 ° par rapport à la perpendiculaire au vitrage.

On constate ainsi en comparant l'exemple 2 avec l'exemple 1 que l'utilisation de couches antireflet barrières 25, 65, 105, 145 en SiZrN à la place de chaque couche antireflet barrière 24, 64, 104, 144 en SiAlN permet d'augmenter la transmission lumineuse du vitrage de plus de 1 %, tout en conservant une réflexion lumineuse sensiblement identique et une couleur en réflexion à 0° et à 60° acceptable.

Toutefois, cet exemple 2 est complexe à mettre en oeuvre sur une ligne de production industrielle du fait que les couches antireflet barrières centrales 65, 105 en SiZrN, celles qui sont encadrées par deux couches fonctionnelles, sont épaisses (58 nm).

L'exemple 3 comparé aux exemples 1 et 2 montre que l'utilisation uniquement de couches antireflet barrières centrales 65, 105 en SiZrN à la place de chaque couche antireflet barrière centrale 64, 104 en SiAlN et en conservant la première et la dernière couches antireflet barrières 24, 144 en SiAlN ne permet pas d'obtenir une augmentation significative de la transmission lumineuse du vitrage (seulement environ + 0,2 %).

Les couches de SiAlN et de SiZrN présentent toutes un coefficient d'extinction k inférieur à 0,01 : le coefficient k à 550 nm du SiAlN est de l'ordre de 1,3 10⁻⁵ et le coefficient k à 550 nm du SiZrN est de l'ordre de 7,5 10⁻⁵.

L'exemple 4 comparé aux exemples 1 à 3 montre que l'utilisation uniquement de première et dernière couches antireflet barrières 25, 145 à haut indice en SiZrN à la place de première et dernière couches antireflet barrières 24, 144 à indice moyen en SiAlN et en conservant chaque couche antireflet barrière centrale 64, 104 à indice moyen en SiAlN permet, tout comme à l'exemple 2, d'obtenir une augmentation significative de la transmission lumineuse du vitrage (environ + 1 %) ; toutefois, cet exemple est plus simple et plus facile à mettre en oeuvre que l'exemple 2 ; il est en outre moins onéreux.

Dans cette série des exemples 1 à 4, seul l'exemple 4 est un exemple selon l'invention car le revêtement antireflet 20 situé sous la première couche fonctionnelle 40 en partant du substrat et le revêtement antireflet 140 situé au-dessus de la dernière couche fonctionnelle 120 en partant du substrat comportent chacun au moins une couche antireflet à haut indice 25, 145 et chaque revêtement antireflet 60, 100 disposé entre deux couches fonctionnelles ne comporte pas de couche antireflet à haut indice.

L'exemple 1 n'est pas un exemple selon l'invention car aucun revêtement antireflet 20, 60, 100, 140 ne comporte de couche antireflet à haut indice.

L'exemple 2 n'est pas un exemple selon l'invention car tous les revêtements antireflet 20, 60, 100, 140 comportent chacun une couche antireflet à haut indice.

L'exemple 3 n'est pas non plus un exemple selon l'invention car le revêtement antireflet 20 situé sous la première couche fonctionnelle 40 en partant du substrat et le revêtement antireflet 140 situé au-dessus de la dernière couche fonctionnelle 120 en partant du substrat ne comportent pas chacun au moins une couche antireflet à haut indice et chaque revêtement antireflet 60, 100 disposé entre deux couches fonctionnelles comporte une couche antireflet à haut indice 65, 105.

Dans cette première série d'exemples 1 à 4, les épaisseurs des trois couches d'argent de chaque exemple sont identiques et sont toutes de 13 nm.

Une seconde série de quatre exemples a été réalisée en utilisant les mêmes conditions de dépôt que pour la première série (tableau 1) ; ces exemples sont numérotés de 5 à 8 ci-après. Ils ont tous les quatre été incorporés dans un vitrage feuilleté de structure : substrat en verre porteur de l'empilement de 1,6 mm d'épaisseur / feuille intercalaire en PVB de 0,76 mm d'épaisseur / substrat en verre de 1,6 mm d'épaisseur.

Dans cette seconde série, l'épaisseur totale des couches fonctionnelles est identique d'un exemple à l'autre et est identique à l'épaisseur totale des couches fonctionnelles de la première série d'exemples ; toutefois, à la différence de la première série d'exemples, les trois couches fonctionnelles ne sont pas toutes les trois d'épaisseurs identiques : la couches fonctionnelle la plus proche du substrat (Ag1) est plus épaisse que la suivante (Ag2) qui est elle-même plus épaisse que la suivante (Ag3) ; Dans la série d'exemples 5 à 8, il y a donc une répartition décroissante de l'épaisseur des couches fonctionnelles en partant du substrat, suivant en cela l'enseignement de la demande internationale de brevet déposée sous le N° PCT/FR2010/051732 et publiée sous le N ° WO 2011/020974.

Le tableau 4 suivant résume les matériaux et les épaisseurs en nanomètres de chaque couche et la composition des couches qui constituent l'empilement en fonction de leurs positions vis-à-vis du substrat porteur de l'empilement (dernière ligne en bas du tableau) pour les exemples 5 à 8 ; les numéros de la 1^{ère} et de la 2^{e} colonne correspondent aux références de la figure 1.

**Tableau 4**

| | | | Ex. 5 | Ex. 6 | Ex. 7 | Ex. 8 |
|---|---|---|---|---|---|---|
| | | Verre | | | | |
| | | PVB | | | | |
| 140 | 145 | SiZrN | | 30 | | 30 |
| | 144 | SiN | 35 | | 35 | |
| 135 | | NiCr | 1 | 1 | 1 | 1 |
| 120 | | Ag3 | 11 | 11 | 11 | 11 |
| 100 | 108 | ZnO | 7 | 7 | 7 | 7 |
| | 105 | SiZrN | | 58 | 58 | |
| | 104 | SiN | 63 | | | 63 |
| | 102 | ZnO | 7 | 7 | 7 | 7 |
| 95 | | NiCr | 1 | 1 | 1 | 1 |
| 80 | | Ag2 | 13 | 13 | 13 | 13 |
| 60 | 68 | ZnO | 7 | 7 | 7 | 7 |
| | 65 | SiZrN | | 58 | 58 | |
| | 64 | SiN | 63 | | | 63 |
| | 62 | ZnO | 7 | 7 | 7 | 7 |
| 55 | | NiCr | 1 | 1 | 1 | 1 |
| 40 | | Ag1 | 15 | 15 | 15 | 15 |
| 20 | 28 | Zn0 | 7 | 7 | 7 | 7 |
| | 25 | SiZrN | | 30 | | 30 |
| | 24 | SiN | 35 | | 35 | |
| | 10 | Verre | | | | |

L'épaisseur eₓ de chaque couche fonctionnelle 80, 120 est inférieure à l'épaisseur de la couche fonctionnelle précédente en direction du substrat 10 et est telle que : eₓ = α eₓ₋₁, avec :
* x qui est le rang de la couche fonctionnelle en partant du substrat 10,
* x-1 qui est le rang de la couche fonctionnelle précédente en direction du substrat 10,
* α qui est un nombre tel que 0,5 ≤ α < 1, et de préférence 0,55 ≤ α ≤ 0,95, voire 0,6 ≤ α ≤ 0,95 et
* l'épaisseur de la première couche métallique fonctionnelle 40 en partant du substrat telle que : 10 ≤ e₁ ≤ 18 en nm, et de préférence 11 ≤ e₁ ≤ 15 en nm.

L'épaisseur e₂ de la seconde couche fonctionnelle 80 est : e₂ = 0,87 e₁ avec ainsi α = 0,87, et l'épaisseur e₃ de la troisième couche fonctionnelle 120 est : e₃ = 0,85 e₂ avec ainsi α = 0,85. La valeur de α est différente (de 0,02), pour toutes les couches fonctionnelles de rang 2 et plus de l'empilement.

Le tableau 5 résume pour les exemples 5 à 8 la résistance par carré mesurée pour chaque substrat porteur de l'empilement après traitement thermique (bombage à 640 °C) et les principales caractéristiques optiques mesurées pour le vitrage feuilleté complet intégrant le substrat porteur de l'empilement, toutes ces mesurées ayant été réalisées de la même manière que pour les exemples 1 à 4 :

**Tableau 5**

| | | Ex. 5 | Ex. 6 | Ex. 7 | Ex. 8 |
|---|---|---|---|---|---|
| T_{L} | % | 71,86 | 72,99 | 72,03 | 72,84 |
| R_{L} | % | 11,06 | 10,04 | 11,01 | 10,06 |
| R_{□} | Ohms/□ | 1,00 | 1,00 | 1,00 | 1,00 |
| Couleur réflexion | a_{R0}* | 0,1 | 1,1 | -0,2 | -1,1 |
| | b_{R0}* | -3,5 | -3,1 | -3,3 | -3,2 |
| Couleur réflexion | a_{R60}* | -4,8 | -3,8 | -5,3 | -3,5 |
| | b_{R60}* | 1,4 | 1,1 | 1,5 | 1,0 |

On constate ainsi dans cette seconde série d'exemples en comparant l'exemple 6 avec l'exemple 5 que l'utilisation de couches antireflet barrières 25, 65, 105, 145 en SiZrN à la place de chaque couche antireflet barrière 24, 64, 104, 144 en SiAlN permet d'augmenter la transmission lumineuse du vitrage de plus de 1 %, tout en conservant une réflexion lumineuse sensiblement identique et une couleur en réflexion à 0° et à 60° acceptable.

Toutefois, cet exemple 6 est complexe à mettre en oeuvre sur une ligne de production industrielle du fait que les couches antireflet barrières centrales 65, 105 en SiZrN, celles qui sont encadrées par deux couches fonctionnelles, sont épaisses (58 nm).

L'exemple 7 comparé aux exemples 5 et 6 montre que l'utilisation uniquement de couches antireflet barrières centrales 65, 105 en SiZrN à la place de chaque couche antireflet barrière centrale 64, 104 en SiAlN et en conservant la première et la dernière couches antireflet barrières 24, 144 en SiAlN ne permet pas d'obtenir une augmentation significative de la transmission lumineuse du vitrage (seulement environ + 0,2 %).

L'exemple 8 comparé aux exemples 5 à 7 montre que l'utilisation uniquement de première et dernière couches antireflet barrières 25, 145 en SiZrN à la place de la première et de la dernière couches antireflet barrières 24, 144 en SiAlN et en conservant chaque couche antireflet barrière centrale 64, 104 en SiAlN permet, tout comme à l'exemple 6, d'obtenir une augmentation significative de la transmission lumineuse du vitrage (environ + 1 %) ; toutefois, cet exemple est plus simple et plus facile à mettre en oeuvre que l'exemple 6 ; il est en outre moins onéreux.

Dans cette série des exemples 5 à 8, seul l'exemple 8 est un exemple selon l'invention car le revêtement antireflet 20 situé sous la première couche fonctionnelle 40 en partant du substrat et le revêtement antireflet 140 situé au-dessus de la dernière couche fonctionnelle 120 en partant du substrat comportent chacun au moins une couche antireflet à haut indice 25, 145 et chaque revêtement antireflet 60, 100 disposé entre deux couches fonctionnelles ne comporte pas de couche antireflet à haut indice.

L'exemple 5 n'est pas un exemple selon l'invention car aucun revêtement antireflet 20, 60, 100, 140 ne comporte de couche antireflet à haut indice.

L'exemple 6 n'est pas un exemple selon l'invention car tous les revêtements antireflet 20, 60, 100, 140 comportent chacun une couche antireflet à haut indice.

L'exemple 7 n'est pas non plus un exemple selon l'invention car le revêtement antireflet 20 situé sous la première couche fonctionnelle 40 en partant du substrat et le revêtement antireflet 140 situé au-dessus de la dernière couche fonctionnelle 120 en partant du substrat ne comportent pas chacun au moins une couche antireflet à haut indice et chaque revêtement antireflet 60, 100 disposé entre deux couches fonctionnelles comporte une couche antireflet à haut indice 65, 105.

Du fait de l'épaisseur totale importante des couches d'argent (et donc de la faible résistance par carré obtenue) ainsi que des bonnes propriétés optiques (en particulier la transmission lumineuse dans le visible), il est possible, par ailleurs d'utiliser le substrat revêtu de l'empilement selon l'invention pour réaliser un substrat électrode transparent.

Ce substrat électrode transparent peut convenir pour un dispositif électroluminescent organique, en particulier en remplaçant une partie de la couche antireflet 145 en nitrure de silicium et de zirconium de l'exemple 4 par une couche conductrice (avec en particulier une résistivité inférieure à 10⁵ Ω.cm) et notamment une couche à base d'oxyde. Cette couche peut être par exemple en oxyde d'étain ou à base d'oxyde de zinc éventuellement dopé Al ou Ga, ou à base d'oxyde mixte et notamment d'oxyde d'Indium et d'étain ITO, d'oxyde d'Indium et de zinc IZO, d'oxyde d'étain et de zinc SnZnO éventuellement dopé (par exemple avec Sb, F). Ce dispositif électroluminescent organique peut être utilisé pour réaliser un dispositif d'éclairage ou un dispositif de visualisation (écran).

La figure 2 illustre une structure d'empilement à quatre couches fonctionnelles 40, 80, 120, 160, cette structure étant déposée sur un substrat 10 verrier, transparent.

Chaque couche fonctionnelle 40, 80, 120, 160, est disposée entre deux revêtements antireflet 20, 60, 100, 140, 180, de telle sorte que la première couche fonctionnelle 40 en partant du substrat est disposée entre les revêtements antireflet 20, 60 ; la deuxième couche fonctionnelle 80 est disposée entre les revêtements antireflet 60, 100 ; la troisième couche fonctionnelle 120 est disposée entre les revêtements antireflet 100, 140 ; et la quatrième couche fonctionnelle 160 est disposée entre les revêtements antireflet 140, 180.

Ces revêtements antireflet 20, 60, 100, 140, 180, comportent chacun au moins une couche antireflet 24 ou 25, 28 ; 64 ou 65, 68 ; 104 ou 105, 108 ; 144 ou 145, 148 ; 184 ou 185.

Eventuellement, d'une part chaque couche fonctionnelle 40, 80, 120, 160, peut être déposée sur un revêtement de sous-blocage 35, 75, 115, 155, disposé entre le revêtement antireflet sous-jacent et la couche fonctionnelle et d'autre part chaque couche fonctionnelle peut être déposée directement sous un revêtement de sur-blocage (non illustré) disposé entre la couche fonctionnelle et le revêtement antireflet sus-jacent.

Sur la figure 2 on constate que l'empilement se termine par une couche de protection optionnelle 200, en particulier à base d'oxyde, notamment sous stoechiométrique en oxygène.

Chaque revêtement antireflet 20, 60, 100, 140 sous-jacent à une couche fonctionnelle 40, 80, 120, 160 comporte une dernière couche antireflet de mouillage 28, 68, 108, 148 à base d'oxyde de zinc cristallisé, dopé à l'aluminium et qui est au contact respectivement de la couche fonctionnelle 40, 80, 120, 160 déposée juste au-dessus.

Chaque revêtement antireflet 20, 60, 100, 140, 180 comporte :
- soit une couche antireflet 24, 64, 104, 144, 184 à indice moyen, à base de nitrure de silicium, dopé à l'aluminium appelée ici SiAlN par soucis de simplification bien que la nature réelle de la couche soit en fait du Si₃N₄:Al comme expliqué ci-avant ;
- soit une couche antireflet 25, 65, 105, 145, 185 à haut indice, à base de nitrure de silicium dopé au zirconium appelée ici SiZrN par soucis de simplification bien que la nature réelle de la couche soit en fait du Si₃N₄:Zr comme expliqué ci-avant.

Ces couches sont importantes pour obtenir l'effet barrière à l'oxygène lors du traitement thermique.

Une troisième série de quatre exemples a été réalisée en utilisant les mêmes conditions de dépôt que pour la première série et la seconde série (tableau 1) ; ces exemples sont numérotés de 9 à 12 ci-après. Ils ont tous les quatre été incorporés dans un vitrage feuilleté de structure : substrat en verre porteur de l'empilement de 1,6 mm d'épaisseur / feuille intercalaire en PVB de 0,76 mm d'épaisseur / substrat en verre de 1,6 mm d'épaisseur.

Dans cette seconde série, l'épaisseur totale des couches fonctionnelles est identique d'un exemple à l'autre et les quatre couches fonctionnelles sont toutes les quatre d'épaisseurs identiques.

Le tableau 6 suivant résume les matériaux et les épaisseurs en nanomètres de chaque couche et la composition des couches qui constituent l'empilement en fonction de leurs positions vis-à-vis du substrat porteur de l'empilement (dernière ligne en bas du tableau) pour les exemples 9 à 12 ; les numéros de la 1^{ère} et de la 2^{e} colonne correspondent aux références de la figure 2.

**Tableau 6**

| | | | Ex. 9 | Ex. 10 | Ex. 11 | Ex. 12 |
|---|---|---|---|---|---|---|
| | | Verre | | | | |
| | | PVB | | | | |
| 180 | 185 | SiZrN | | 30 | | 30 |
| | 184 | SiN | 35 | | 35 | |
| 175 | | NiCr | 1 | 1 | 1 | 1 |
| 160 | | Ag4 | 11,5 | 11,5 | 11,5 | 11,5 |
| 140 | 148 | ZnO | 7 | 7 | 7 | 7 |
| | 145 | SiZrN | | 58 | 58 | |
| | 144 | SiN | 63 | | | 63 |
| | 142 | ZnO | 7 | 7 | 7 | 7 |
| 135 | | NiCr | 1 | 1 | 1 | 1 |
| 120 | | Ag3 | 11,5 | 11,5 | 11,5 | 11,5 |
| 100 | 108 | ZnO | 7 | 7 | 7 | 7 |
| | 105 | SiZrN | | 58 | 58 | |
| | 104 | SiN | 63 | | | 63 |
| | 102 | ZnO | 7 | 7 | 7 | 7 |
| 95 | | NiCr | 1 | 1 | 1 | 1 |
| 80 | | Ag2 | 11,5 | 11,5 | 11,5 | 11,5 |
| 60 | 68 | ZnO | 7 | 7 | 7 | 7 |
| | 65 | SiZrN | | 58 | 58 | |
| | 64 | SiN | 63 | | | 63 |
| | 62 | ZnO | 7 | 7 | 7 | 7 |
| 55 | | NiCr | 1 | 1 | 1 | 1 |
| 40 | | Ag1 | 11,5 | 11,5 | 11,5 | 11,5 |
| 20 | 28 | Zn0 | 7 | 7 | 7 | 7 |
| | 25 | SiZrN | | 30 | | 30 |
| | 24 | SiN | 35 | | 35 | |
| | 10 | Verre | | | | |

Le tableau 7 résume pour les exemples 9 à 12 la résistance par carré mesurée pour chaque substrat porteur de l'empilement après traitement thermique (bombage à 640 °C) et les principales caractéristiques optiques mesurées pour le vitrage feuilleté complet intégrant le substrat porteur de l'empilement, toutes ces mesurées ayant été réalisées de la même manière que pour les exemples 1 à 8 :

**Tableau 7**

| | | Ex. 9 | Ex. 10 | Ex. 11 | Ex. 12 |
|---|---|---|---|---|---|
| T_{L} | % | 72,05 | 72,82 | 72,24 | 72,61 |
| R_{L} | % | 9,02 | 8,43 | 9,02 | 8,44 |
| R_{□} | Ohms/□ | 0,85 | 0,85 | 0,85 | 0,85 |
| Couleur reflexion | a_{R0}* | 6,1 | 5,4 | 6,1 | 5,6 |
| | b_{R0}* | -4,4 | -3,9 | -4,9 | -3,7 |
| Couleur reflexion | a_{R60}* | 5,8 | 4,9 | 5,8 | 5,0 |
| | b_{R60}* | -3,0 | -2,7 | -3,6 | -2,3 |

On constate ainsi dans cette troisième série d'exemples en comparant l'exemple 10 avec l'exemple 9 que l'utilisation de couches antireflet barrières 25, 65, 105, 145, 185 en SiZrN à la place de chaque couche antireflet barrière 24, 64, 104, 144, 184 en SiAlN permet d'augmenter la transmission lumineuse du vitrage de presque 1 %, tout en conservant une réflexion lumineuse sensiblement identique et une couleur en réflexion à 0° et à 60° acceptable.

Toutefois, cet exemple 10 est complexe à mettre en oeuvre sur une ligne de production industrielle du fait que les couches antireflet barrières centrales 65, 105, 145 en SiZrN, celles qui sont encadrées par deux couches fonctionnelles, sont épaisses (58 nm).

L'exemple 11 comparé aux exemples 9 et 10 montre que l'utilisation uniquement de couches antireflet barrières centrales 65, 105, 145 en SiZrN à la place de chaque couche antireflet barrière centrale 64, 104, 144 en SiAlN et en conservant la première et la dernière couches antireflet barrières 24, 184 en SiAlN ne permet pas d'obtenir une augmentation significative de la transmission lumineuse du vitrage (seulement environ + 0,2 %).

L'exemple 12 comparé aux exemples 9 à 11 montre que l'utilisation uniquement de première et dernière couches antireflet barrières 25, 185 en SiZrN à la place de la première et de la dernière couches antireflet barrière 24, 184 en SiAlN et en conservant chaque couche antireflet barrière centrale 64, 104, 144 en SiAlN permet, tout comme à l'exemple 10, d'obtenir une augmentation significative de la transmission lumineuse du vitrage ; toutefois, cet exemple 12 est plus simple et plus facile à mettre en oeuvre que l'exemple 10 ; il est en outre moins onéreux.

Dans cette série des exemples 9 à 12, seul l'exemple 12 est un exemple selon l'invention car le revêtement antireflet 20 situé sous la première couche fonctionnelle 40 en partant du substrat et le revêtement antireflet 180 situé au-dessus de la dernière couche fonctionnelle 160 en partant du substrat comportent chacun au moins une couche antireflet à haut indice 25, 185 et chaque revêtement antireflet 60, 100, 140 disposé entre deux couches fonctionnelles ne comporte pas de couche antireflet à haut indice.

L'exemple 9 n'est pas un exemple selon l'invention car aucun revêtement antireflet 20, 60, 100, 140, 180 ne comporte de couche antireflet à haut indice. L'exemple 10 n'est pas un exemple selon l'invention car tous les revêtements antireflet 20, 60, 100, 140, 180 comportent chacun une couche antireflet à haut indice. L'exemple 11 n'est pas non plus un exemple selon l'invention car le revêtement antireflet 20 situé sous la première couche fonctionnelle 40 en partant du substrat et le revêtement antireflet 180 situé au-dessus de la dernière couche fonctionnelle 160 en partant du substrat ne comportent pas chacun au moins une couche antireflet à haut indice et chaque revêtement antireflet 60, 100, 140 disposé entre deux couches fonctionnelles comporte une couche antireflet à haut indice 65, 105, 145.

D'une manière générale, le substrat électrode transparent peut convenir comme substrat chauffant pour un vitrage chauffant et en particulier un pare-brise feuilleté chauffant. Il peut aussi convenir comme substrat électrode transparent pour tout vitrage électrochrome, tout écran de visualisation, ou encore pour une cellule photovoltaïque et notamment pour une face avant ou une face arrière de cellule photovoltaïque transparente.

La présente invention est décrite dans ce qui précède à titre d'exemple. Il est entendu que l'homme du métier est à même de réaliser différentes variantes de l'invention sans pour autant sortir du cadre du brevet tel que défini par les revendications.

## Revendications

1. Substrat (10) verrier transparent muni d'un empilement de couches minces comportant une alternance de « n » couches fonctionnelles (40, 80, 120) métalliques, notamment de couches fonctionnelles à base d'argent ou d'alliage métallique contenant de l'argent, et de « (n + 1) » revêtements antireflet (20, 60, 100, 140), avec n nombre entier ≥ 3, chaque revêtement antireflet comportant au moins une couche antireflet, de manière à ce que chaque couche fonctionnelle (40, 80, 120) soit disposée entre deux revêtements antireflet (20, 60, 100, 140), ***caractérisé en ce que*** ledit empilement comporte au moins deux couches antireflet à haut indice (25, 145), chacune présentant un indice de réfraction ≥ 2,15 à une longueur d'onde de 550 nm et un coefficient d'absorption k inférieur à 0,01 à une longueur d'onde de 550 nm, de telle sorte que le revêtement antireflet (20) situé sous la première couche fonctionnelle (40) en partant du substrat et le revêtement antireflet situé au-dessus de la dernière couche fonctionnelle en partant du substrat comportent chacun au moins une couche antireflet à haut indice (25, 145) et que chaque revêtement antireflet (60, 100) qui est disposé entre deux couches fonctionnelles ne comporte pas de couche antireflet à haut indice.

2. Substrat (10) selon la revendication 1, ***caractérisé en ce que*** le revêtement antireflet (20) situé sous la première couche fonctionnelle (40) en partant du substrat est constitué dans cet ordre en partant du substrat : une ou plusieurs couches antireflet à haut indice (25), puis une couche antireflet de mouillage (28) d'indice de réfraction moyen compris entre 1,60 et 2,15 en excluant ces valeurs, à base d'oxyde cristallisé, notamment à base d'oxyde de zinc, éventuellement dopé à l'aide d'au moins un autre élément comme l'aluminium.

3. Substrat (10) selon la revendication 1 ou 2, ***caractérisé en ce que*** le revêtement antireflet situé au-dessus de la dernière couche fonctionnelle en partant du substrat est constitué uniquement d'une ou de plusieurs couches antireflet à haut indice.

4. Substrat (10) selon l'une quelconque des revendications 1 à 3, ***caractérisé en ce que*** au moins une, voire chaque, couche antireflet à haut indice (25, 145) est à base de nitrure de silicium et de zirconium.

5. Substrat (10) selon l'une quelconque des revendications 1 à 4, ***caractérisé en ce que*** l'épaisseur eₓ de chaque couche fonctionnelle (80, 120) est inférieure à l'épaisseur de la couche fonctionnelle précédente en direction du substrat (10) et est telle que : eₓ = α eₓ₋₁, avec :
* x qui est le rang de la couche fonctionnelle en partant du substrat (10),
* x-1 qui est le rang de la couche fonctionnelle précédente en direction du substrat (10),
* α qui est un nombre tel que 0,5 ≤ α < 1, et de préférence 0,55 ≤ α ≤ 0,95, voire 0,6 ≤ α ≤ 0,95 et
* l'épaisseur de la première couche métallique fonctionnelle en partant du substrat telle que : 10 ≤ e₁ ≤ 18 en nm, et de préférence 11 ≤ e₁ ≤ 15 en nm.

6. Substrat (10) selon la revendication 5, ***caractérisé en ce que*** la valeur de α est différente pour toutes les couches fonctionnelles de rang 2 et plus.

7. Substrat (10) selon l'une quelconque des revendications 1 à 6, ***caractérisé en ce que*** L'épaisseur totale des couches métalliques fonctionnelles est de préférence supérieure à 30 nm et est notamment comprise entre 30 et 60 nm en incluant ces valeurs, voire cette épaisseur totale est comprise entre 35 et 50 nm pour un empilement de couches minces à trois couches fonctionnelles, voire cette épaisseur totale est comprise entre 40 et 60 nm pour un empilement de couches minces à quatre couches fonctionnelles.

8. Substrat (10) selon l'une quelconque des revendications 1 à 7, ***caractérisé en ce que*** chacun desdits revêtements antireflet (60, 100) disposés entre deux couches fonctionnelles qui ne comporte pas de couche antireflet à haut indice comporte au moins une couche antireflet (64, 104) à base de nitrure de silicium, éventuellement dopé à l'aide d'au moins un autre élément, comme l'aluminium.

9. Substrat (10) selon l'une quelconque des revendications 1 à 8, ***caractérisé en ce que*** la dernière couche de chaque revêtement antireflet sous-jacent à une couche fonctionnelle (40, 80, 120) est une couche antireflet de mouillage (28, 68, 108) à base d'oxyde cristallisé, notamment à base d'oxyde de zinc, éventuellement dopé à l'aide d'au moins un autre élément, comme l'aluminium.

10. Vitrage incorporant au moins un substrat (10) selon l'une quelconque des revendications 1 à 9, éventuellement associé à au moins un autre substrat et notamment vitrage multiple du type double-vitrage ou triple vitrage ou vitrage feuilleté et en particulier vitrage feuilleté comportant des moyens pour la connexion électrique de l'empilement de couches minces afin de permettre de réaliser un vitrage feuilleté chauffant, ledit substrat porteur de l'empilement pouvant être bombé et/ou trempé.

11. Utilisation du substrat selon l'une quelconque des revendications 1 à 9, pour réaliser un revêtement transparent chauffant d'un vitrage chauffant ou pour réaliser une électrode transparente d'un vitrage électrochrome ou d'un dispositif d'éclairage ou d'un dispositif de visualisation ou d'un panneau photovoltaïque.

## Patentansprüche

1. Transparentes Glassubstrat (10) mit einem Stapel aus dünnen Schichten, die einen Wechsel von "n" metallischen Funktionsschichten (40, 80, 120), besonders von Funktionsschichten auf der Basis von Silber oder einer silberhaltigen Metalllegierung, und von "n+1" Antireflexbeschichtungen (20, 60, 100, 140) umfasst, wobei n eine Ganzzahl ≥ 3 ist und jede Antireflexbeschichtung mindestens eine Antireflexschicht umfasst, so dass jede Funktionsschicht (40, 80, 120) zwischen zwei Antireflexbeschichtungen (20, 60, 100, 140) angeordnet ist, **dadurch gekennzeichnet dass** der Stapel mindestens zwei Antireflexschichten mit hohem Index (25, 145) umfasst, wobei jede einen Brechungsindex ≥ 2,15 bei einer Wellenlänge von 550 nm und einen Absorptionskoeffizienten k unter 0,01 bei einer Wellenlänge von 550 nm aufweist, so dass die Antireflexbeschichtung (20), die sich unter der ersten Funktionsschicht (40) ausgehend vom Substrat befindet, und die Antireflexbeschichtung über der letzten Funktionsschicht ausgehend vom Substrat jeweils mindestens eine Antireflexschicht mit hohem Index (25, 145) umfasst und jede Antireflexbeschichtung (60, 100), die zwischen zwei Funktionsschichten angeordnet ist, keine Antireflexschicht mit hohem Index aufweist.

2. Substrat (10) nach Anspruch 1, **dadurch gekennzeichnet, dass** die Antireflexbeschichtung (20), die sich unter der ersten Funktionsschicht (40) ausgehend vom Substrat befindet, ausgehend vom Substrat in dieser Reihenfolge gebildet ist: eine oder mehrere Antireflexschichten mit hohem Index (25), dann eine Antireflexbenetzungsschicht (28) mit einem mittleren Brechungsindex zwischen 1,60 und 2,15, diese Werte ausschließend, auf der Basis eines kristallisierten Oxids, insbesondere auf der Basis von Zinkoxid, eventuell dotiert mithilfe mindestens eines anderen Elements wie Aluminium.

3. Substrat (10) nach Anspruch 1 oder 2, **dadurch gekennzeichnet, dass** die Antireflexbeschichtung, die über der letzten Funktionsschicht ausgehend vom Substrat liegt, nur aus einer oder mehreren Antireflexschichten mit hohem Index besteht.

4. Substrat (10) nach einem der Ansprüche 1 bis 3, **dadurch gekennzeichnet, dass** mindestens eine, sogar jede Antireflexschicht mit hohem Index (24, 145) auf der Basis von Siliziumnitrid und Zirkonium vorliegt.

5. Substrat (10) nach einem der Ansprüche 1 bis 4, **dadurch gekennzeichnet, dass** die Dicke eₓ jeder Funktionsschicht (80, 120) geringer ist als die Dicke der vorherigen Funktionsschicht in Richtung des Substrats (10) und so beschaffen ist, dass: eₓ = α eₓ₋₁, wobei:
* x der Rangplatz der Funktionsschicht ausgehend vom Substrat (10) ist,
* x-1 der Rangplatz der vorherigen Funktionsschicht in Richtung des Substrats (10) ist;
* α eine Zahl wie etwa 0,5 ≤ α < 1, und vorzugsweise 0,55 ≤ α ≤ 0,95, ja sogar 0,6 ≤ α ≤ 0,95 und
* die Dicke der ersten metallischen Funktionsschicht ausgehend vom Substrat so beschaffen ist, dass: 10 ≤ e₁ ≤ 18 in nm, und vorzugsweise 11 ≤ e₁ ≤ 15 in nm.

6. Substrat (10) nach Anspruch 5, **dadurch gekennzeichnet, dass** der Wert von α für alle Funktionsschichten von Rangplatz 2 und mehr unterschiedlich ist.

7. Substrat (10) nach einem der Ansprüche 1 bis 6, **dadurch gekennzeichnet, dass** die Gesamtdicke der metallischen Funktionsschichten vorzugsweise größer als 30 nm ist und insbesondere zwischen 30 und 60 nm liegt, diese Werte eingeschlossen, ja sogar dass diese Gesamtdicke bei einem Stapel dünner Schichten mit drei Funktionsschichten zwischen 35 und 50 nm liegt, ja sogar dass die Gesamtdicke bei einem Stapel dünner Schichten mit vier Funktionsschichten zwischen 40 und 60 nm liegt.

8. Substrat (10) nach einem der Ansprüche 1 bis 7, **dadurch gekennzeichnet, dass** jede der zwischen zwei Funktionsschichten angeordneten Antireflexbeschichtungen (60, 100), die keine Antireflexschicht mit hohem Index umfasst, mindestens eine Antireflexschicht (64, 104) auf der Basis von Siliziumnitrid umfasst, eventuell dotiert mithilfe mindestens eines anderen Elements wie Aluminium.

9. Substrat (10) nach einem der Ansprüche 1 bis 8, **dadurch gekennzeichnet, dass** die letzte Schicht jeder unter einer Funktionsschicht (40, 80, 120) liegenden Antireflexbeschichtung eine Antireflexbenetzungsschicht (28, 68, 108) auf der Basis eines kristallisierten Oxids ist, insbesondere auf der Basis von Zinkoxid, eventuell dotiert mithilfe mindestens eines anderen Elements wie Aluminium.

10. Glas, mindestens ein Substrat (10) nach einem der Ansprüche 1 bis 9 enthaltend, eventuell verbunden mit mindestens einem anderen Substrat und insbesondere Mehrfachglas von Typ Doppelglas oder Dreifachglas oder Verbundglas und insbesondere Verbundglas umfassend Mittel zum elektrischen Anschluss des Stapels dünner Schichten, um Heiz-Verbundglas realisieren zu können, wobei das Trägersubstrat des Stapels gewölbt und/oder gehärtet sein kann.

11. Nutzung des Substrats nach einem der Ansprüche 1 bis 9 zum Realisieren einer transparenten Heizbeschichtung eines Heizglases oder zum Realisieren einer transparenten Elektrode eines elektrochromen Glases oder einer Beleuchtungsvorrichtung oder einer Visualisierungsvorrichtung oder einer photovoltaischen Tafel.

## Claims

1. A substrate (10), especially a transparent glass substrate, equipped with a thin-film multilayer comprising, in alternation, "n" metallic functional films (40, 80, 120), in particular functional films based on silver or a metal alloy containing silver, and "(n+1)" antireflection coatings (20, 60, 100, 140), where n is an integer ≥ 3, each antireflection coating comprising at least one antireflection film, so that each functional film (40, 80, 120) is located between two antireflection coatings (20, 60, 100, 140), ***characterized in that*** said multilayer comprises at least two high-refractive-index antireflection films (25, 145), each having a refractive index ≥ 2.15 at a wavelength of 550 nm and an absorption coefficient k below 0.01 at a wavelength of 550 nm, such that the antireflection coating (20) located under the first, starting from the substrate, functional film (40) and the antireflection coating located on the last, starting from the substrate, functional film each comprise at least one high-refractive-index antireflection film (25, 145) and each antireflection coating (60, 100) located between two functional films does not comprise a high-refractive-index film

2. The substrate (10) as claimed in claim 1, ***characterized in that*** the antireflection coating (20) located under the first, starting from the substrate, functional film (40) consists, in this order, starting from the substrate, of: one or more high-refractive-index antireflection films (25) and then a medium-refractive-index wetting antireflection film (28) having a refractive index of between 1.60 and 2.15, excluding these values, and based on a crystalline oxide, especially zinc oxide, optionally doped with at least one other element such as aluminum.

3. The substrate (10) as claimed in either one of claims 1 and 2, ***characterized in that*** the antireflection coating located on the last, starting from the substrate, functional film consists uniquely of one or more high-refractive-index antireflection films.

4. The substrate (10) as claimed in any one of claims 1 to 3, ***characterized in that*** at least one, even each, high-refractive-index antireflection film (25, 145) is based on silicon zirconium nitride.

5. The substrate (10) as claimed in any one of claims 1 to 4, ***characterized in that*** the thickness eₓ of each functional film (80, 120) is smaller than the thickness of the preceding functional film, in the direction of the substrate (10), and is such that: eₓ = α eₓ₋₁, where:
• x is the row, starting from the substrate (10), of the functional film;
• x-1 is the row, in the direction of the substrate (10), of the preceding functional film;
• α is a number such that 0.5 ≤ α < 1, and preferably 0.55 ≤ α 0.95, or 0.6 ≤ α ≤ 0.95; and
• the thickness of the first, starting from the substrate, metallic functional film is such that 10 ≤ e₁ ≤ 18 in nm and preferably 11 ≤ e₁ ≤ 15 in nm.

6. The substrate (10) as claimed in claim 5, ***characterized in that*** the value of α is different for all the functional films of row 2 or more.

7. The substrate (10) as claimed in any one of claims 1 to 6, ***characterized in that*** the total thickness of the metallic functional films is preferably greater than 30 nm and especially lies between 30 and 60 nm, including these values, or this total thickness lies between 35 and 50 nm for a thin-film multilayer comprising three functional films, or this total thickness lies between 40 and 60 nm for a thin-film multilayer comprising four functional films.

8. The substrate (10) as claimed in any one of claims 1 to 7, ***characterized in that*** each of said antireflection coatings (60,100) located between two functional films that do not comprise a high-refractive-index antireflection film comprise at least one antireflection film (64, 104) based on silicon nitride, optionally doped with at least one other element, such as aluminum.

9. The substrate (10) as claimed in any one of claims 1 to 8, ***characterized in that*** the last film of each antireflection coating subjacent a functional film (40, 80, 120) is a wetting antireflection film (28, 68, 108) based on a crystalline oxide, especially zinc oxide, optionally doped with at least one other element, such as aluminum.

10. A glazing unit incorporating at least one substrate (10) as claimed in any one of claims 1 to 9, optionally associated with at least one other substrate and especially a multiple glazing unit such as a double or triple glazing unit or a laminated glazing unit and in particular a laminated glazing unit comprising means of electrically connecting the thin-film multilayer in order to allow a heated laminated glazing unit to be produced, said substrate bearing the multilayer possibly being bent and/or tempered.

11. The use of the substrate as claimed in any one of claims 1 to 9, to produce a heated transparent coating for a heated glazing unit or to produce a transparent electrode for an electrochromic glazing unit or for a lighting device or for a display device or for a photovoltaic panel.
